# EUROPEAN PATENT SPECIFICATION

(11) **EP 2 613 496 B1**
(45) Date of publication and mention of the grant of the patent: **09.05.2018**
(21) Application number: 12150500.2
(22) Date of filing: 09.01.2012
(51) Int. Cl.: H04W 4/18, H04W 4/02

(54) **Method to geo-tag streaming music**
Verfahren zum Versehen mit Geo-Tags von Streaming-Musik
Procédé d'étiquetage géographique de musique diffusée en continu

(43) Date of publication of application: 10.07.2013
(73) Proprietor: BlackBerry Limited, Waterloo, ON N2K 0A7 (CA)
(72) Inventor: Martin, Daryl Joseph, Waterloo, Ontario N2L 3W8 (CA); O'Neill, Conor Michael, Waterloo, Ontario N2L 3W8 (CA)
(74) Representative: Noble, Nicholas

(56) References cited:
- WO-A1-2010/043425
- US-A1- 2009 143 977
- US-A1- 2011 159 885

## Description

The present disclosure relates generally to a manner by which to identify information. More particularly, the present disclosure relates to a system, method, and apparatus for geo-tagging streaming data.

### Background

Hybrid digital radio or "HD Radio" is well known. It permits AM and FM broadcast stations to send program material as a digital data stream and as an analog signal, at the same time. HD radio thus allows radio stations to "multicast" or transmit digital and analog signals, at the same time.

The ability to transmit digital data gives HD radio the ability to provide data services such as vehicle traffic messages, the name of the station to which a listener is tuned to, and, information about content being broadcast from the station. Information about content being broadcast typically include song title and/or the name of an artist.

Internet streaming and satellite radio also have the ability to provide program content that includes music while simultaneously streaming data that can include vehicle traffic messages, the name of the station to which a listener is tuned to, and, information about content being broadcast from the station. Portable communications devices, such as the Blackberry® from Research In Motion, have the ability to wirelessly receive streaming data.

Many drivers who listen to music on an HD car radio while driving and, individuals who listen to music or other content via a wireless communications device, sometimes hear a song or other content that might be liked but they have no idea who the artist is or the name of the particular song. Computer programs exist which try to identify a particular song by sampling the audio and comparing against a database, however, such programs require their purchase and are time consuming to use.

WO 2010/043425 discloses a method and apparatus by which music that is most popular within a certain user-geographical area can be obtained or downloaded, however, providing a list of music genres that might be popular in one particular area does not identify a particular song that a user might have heard while in that area or traveling along a route and which a user might wish to replay or repeat at a later time. U.S. Pre-Grant Publication 2009/0143977 discloses a method and apparatus by which a user can identify a destination or location or points of interest and "geo-tag them" or otherwise associate a point of interest, location with a photo but it too cannot tag a particular received song to a title thereof. A need therefore exists for a user to be able to recover or retrieve the name of a particular song that a user might have enjoyed or liked while traveling along a particular route in a particular area.

The invention is set out in the claims.

### Brief Description of the Drawings

FIG. 1 is a block diagram representation of a system by which streaming music on an HD radio can be geo-tagged;
FIG. 2 is a depiction of a map displayed on a display device and which shows a route traversed by a radio as geo-tagging occurs;
FIG. 3 is a graphical depiction of how different song titles can be received over time;
FIG. 4 is a depiction of a database for storing a list of time entries, cross-referenced or index to a list of coordinates 404, and cross-referenced or indexed to a list of song titles; and
FIG. 5 is a depiction of a method of correlating a song received by a moving radio to one or more geographic locations where the song was received, which is also referred to herein as "geo-tagging."

### Detailed Description

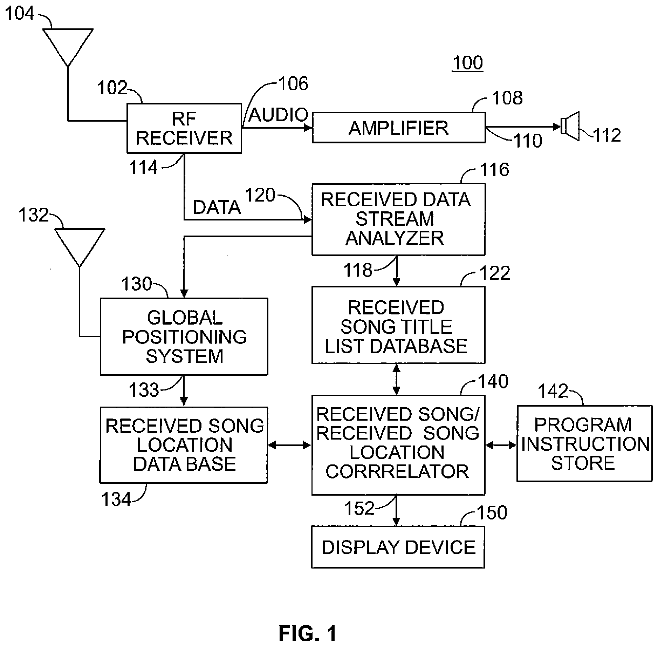

FIG. 1 is a block diagram representation of a system 100 by which streaming music on an HD radio can be geo-tagged. As used herein, the term "geo-tag" should be construed to mean the identification of a song title and/or its author and/or a performing artist, to a geographic location where the song was received on an HD radio, a geographic location being identified by latitude and longitude coordinates.

Geo-tagging includes the ability to store one or more song titles, authors or performing artist with the geographic location where the song was received on an HD radio, as either separate character strings, separated by commas, spaces or other ASCII characters, or as one continuous string that includes field separators such as commas. Geo-tagging also includes the indexing, retrieval of the song title by location or the location by the song title and the selective display of a route over which an HD radio traveled during which songs were received, the titles recovered and stored and indexed. Geo-tagging also includes the storage, indexing and retrieval of a radio station call sign or call letters assigned to it by governmental agencies such as the U.S. Federal Communications Commission, and its licensed radio frequency.

The system 100 depicted in FIG. 1 is comprised of an HD radio receiver 102, which receives radio frequency signals from a conventional antenna 104. The radio receiver 102 recovers data from the RF signal using prior art devices and techniques. Audio that is output from an audio output port 106 of the radio frequency receiver 102. Audio on the port 106 is provided to a conventional audio power amplifier 108. The output 110 of the amplifier 108 is coupled to one or more conventional speakers 112 from which audio content that was recovered from the received radio frequency signal carrier, is available to a user.

In addition to an audio frequency output 106, the HD radio frequency receiver 102 has a data output port 114 from which a serial data steam is output. The serial data output from the data output port 114 is comprised of data recovered from the HD radio frequency signal. The serial data is provided to a received data stream analyzer 116.

The received data stream analyzer 116 analyzes the serial data stream from the radio frequency receiver 102 and identifies information in that stream. The data that comprises the stream sent to the data stream analyzer most typically includes song titles and an artist performing a song. Data in the data stream sent to the data stream analyzer 116 can also include, however, "meta-data," which is considered herein as including "album art," which is in turn considered to be one or more graphic images or symbols published by the artist or publisher of a song, and which is associated with a song or the album. The data included in the data stream to the data stream analyzer can also include the call letters or call sign of the HD radio station, and/or the radio frequency licensed to the radio station owner/operator by a governmental agency, such as the U.S. Federal Communications Commission. Data in the stream sent to the data stream analyzer can include indicators that identify or signal when a commercial or non-program-content message starts and ends. For brevity, the term "radio station" should be construed as including the call letters/call sign and/or the licensed broadcast frequency" of an HD radio signal provider.

The received data stream analyzer 116 can be embodied as a processer that executes stored program instructions examples of which include a microcontroller or a digital signal processer. It preferably has at least two outputs embodied as data, or it can output at least two different types of signals from a single output port or terminal. For purposes of illustration, a first output 118 is comprised of data representing: song titles and/or names of artists and/or meta-data related to the song, and/or a radio station, which of course the received data stream analyzer 116 identified in the data stream 120 that it receives from the RF receiver 102. Received song titles and/or artists output from the received data stream analyzer 116 are provided to a "received song title list database" 122. Radio station and meta data can be optionally provided to the received song title list data base 122 or to one or more other data bases.

The received song title database list 122 is preferably stored in a computer-readable memory device, examples of which would include magnetic storage media or semiconductor memory devices such as a flash memory device or other electrically alterable memory devices. The insertion of received song titles and/or received artists, radio station information and/or meta-data into the received song title list database 122 can be effectuated by the received data stream analyzer 116 or by another processer or other device not shown and omitted for clarity purposes.

A second output from the received data stream analyzer 116 is a trigger signal 124 to a conventional global positioning system 130 coupled to its own conventional antenna 132. The global positioning system 130 is configured somewhat differently than other GPS systems in that it can be maintained in an idle state until triggered to determine a location of the system 100 responsive to a signal output from the second output 124 of the received data stream analyzer 116. The global positioning system or GPS 130 is thus configured to determine a location of the radio frequency receiver 102 and thus the user where a song is heard, responsive to the detection of a song title and/or artist name in the data 120 received by the receiver 102.

After the global positioning system 130 determines its location responsive to a trigger signal output signal from the received data stream analyzer 116, the global positioning system 130 has an output port or terminal 132 through which it outputs the determined location to a received song location database, which is embodied as either a convention random access memory device, a flash memory or a magnetic media. It can be the same memory device where received song titles are kept. The received song location database is a database or list of locations, determined by the GPS 130, where a song was received by the HD receiver 102 and thus played to a user via the speaker 112. The received song location database 134 stores locations determined by the global positioning system 130 responsive to signals that the GPS receives from the received data stream analyzer 116. The received song location database 134 is thus a list of latitude and longitude coordinates whereat a particular song was received by the receiver and listened to by the user. The received song location data base 135, can also include information pertaining to radio stations from which a song was received ("radio station" data) as well as include meta-data associated with songs, cross-referenced to the latitude and longitude coordinates where such data was received.

A received song/location correlator 140 is coupled to both the received song location database 134 and received song title list database 122. The received song/received song location correlator 140 is configured to cross-reference or index titles of received songs to the various geographic locations that were stored in the received song location data base 134 by the GPS 130. The received song/received song location correlator 140 thus makes it possible to locate a song title in the received in the received song location database 122 by a geographic location at which the song was received by the receiver 102, an artist who performed the song, display a radio station from which it was received and/or display meta-data associated with the song or the album on which the song was "released" by an artist.

The correlator 140 is preferably embodied as a processor, such as a microcontroller or GSP coupled to its own program instruction storage device 142. Program instructions stored in the storage device 142 imbue the correlator 140 with the ability to display information on an associated display device 150 and, to perform the aforementioned cross-referencing.

Referring now to the display device 150, in a preferred embodiment the display device 150 is a conventional touch-sensitive display device. It is capable of both displaying images and detecting on a screen, a touch input, such as a user's finger. Such screens are well-known and commonly used on so called "smart phones." They are also used at airport ticketing kiosks. When the display device 150 receives a tactile input, it outputs a signal 152 to the correlator 140 corresponding to and identifying a location on the touch-sensitive screen where the tactile input was made.

The correlator 140 is configured to generate images of maps and to effectuate or cause the display of those maps on the display device 150. The correlator 140 is also configured to display on the displayed maps, a route over which the radio receiver 102 travelled over a previous time period.

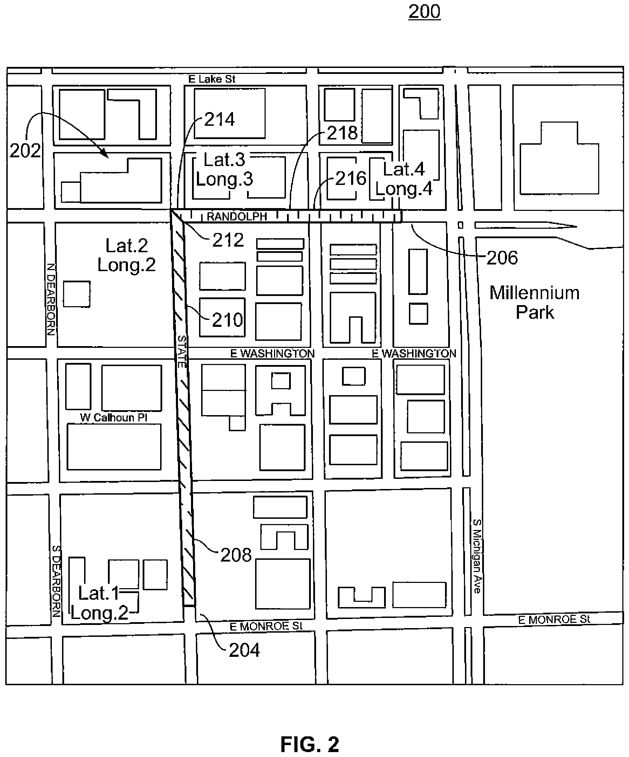

FIG. 2 is a depiction of a map 200 displayed on a display device 150. The map 200 displays an example of a route 202 that was travelled by the radio between a starting point 204 and an ending point 206. As shown in FIG. 2, the starting point 204 is displayed on the map 200 by highlighting or an icon proximate to the displayed intersection of South State Street and East Monroe Street. Latitude and longitude coordinates displayed near the intersection specify where a first song was received by the system 100, its included HD radio 102, the names of the songs and/or artist being stored contemporaneously into memory.

A first leg 208 of the route 202 extends northward from East Monroe Street to just south of Randolph as shown by the highlighting on either side of South State Street. Reference numeral 212 identifies a point on the first leg 208 where the first song ended, the end of the first song being detected by the receiver 102 by a new data string identifying a second song title and/or artist. The latitude and longitude where the first song ended and a second song begins is identified by corresponding latitude and longitude coordinates identified in the figure as "Lat. 2" and "Long. 2."

The map 200 shows that the route 202 of the system 100/radio 102 changes direction at the intersection of Randolph Street and State Street and goes eastward to a point just west of Michigan Avenue identified by reference numeral 206. The direction change at the corner of Randolph and State Street is identified as the end of the first leg 208 and has its own latitude and longitudinal coordinates identified as "Lat. 3" and "Long. 3." A second leg of the route is identified by reference numeral 216. The second leg ends at the "Lat. 4" and "Long. 4" coordinates.

The portion of the route 202 over which the second song was received by the receiver is identified by highlighting adjacent the route from the point 212 where the first song ended. The second highlighting 218 thus identifies a portion of the route 202 over which the second song was received by the receiver.

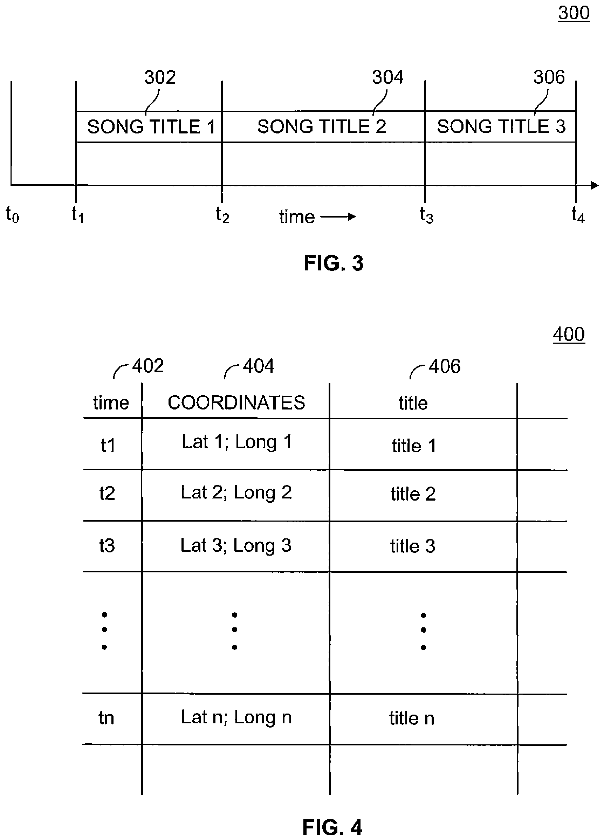

FIG. 3 is a graphical depiction 300 of how different song titles might be received from an HD radio broadcast over a finite period of time. At a first time denominated as t₁ a first song title 302 is received by the radio frequency receiver 102. The first song has a time duration up until t₂. FIG. 3 depicts the immediate commencement of a second song with a second title 304 at t₂. The second song lasts until t₃ whereat a third song starts with a third song title 306. The third song ends at t₄.

For illustration purposes, the songs depicted in FIG. 3 having the corresponding song titles 302, 304, 306 can be considered to have a total play time equal the time required for the radio 122 to traverse the route 202 shown in FIG. 2. The first song having the first song title 302 might be considered to start at the origin 204 and last until the radio reaches the second location identified by Lat 2 and Long 2. The second song with the second song title 304 might be considered to have a duration that will last from the Lat 2, Long 2 location up to the end point 206 of the route 202. Thereafter, the radio can be considered or assumed to stay at the destination point 206.

During the time that song titles are received, the radio is traversing the route 202 and changing locations. The changing location of the system 100/radio 102 over time are determined by the GPS system 130 and stored in memory. The system depicted in FIG. 1 is thus configured to receive a signal with information that comprises at least the title of a song and upon the reception of that information or the song title determine a geographic location. The geographic location or a song starts is written into a database along with the time that it started and the title that was received. The system is further configured to repetitively calculate latitude and longitude for as long as the song continues to play.

When a song terminates or changes, the system 100 is configured to determine at least a second geographic location where a second song starts and to record that location and the song title and the time into the same database. The coordinates or locations over which a song is received is thus stored in a memory device and cross-referenced or indexed against the song title. It is therefore possible to retrieve a song title by referencing portions of the route 202 displayed on the map 200.

FIG. 4 is a depiction of a database 400 storing a list of time entries 402, a list of coordinates 404 and a list of song titles 406. The coordinates 404 are those coordinates of locations along which a song having the title in the title list 406 played along a route. The time of reception is also recorded. The correlator 140 accesses a data base such as the database 400 depicted in FIG. 4 and facilitates retrieval of a song title using geographic coordinates. The song is thus tagged geographically or "geo-tagged."

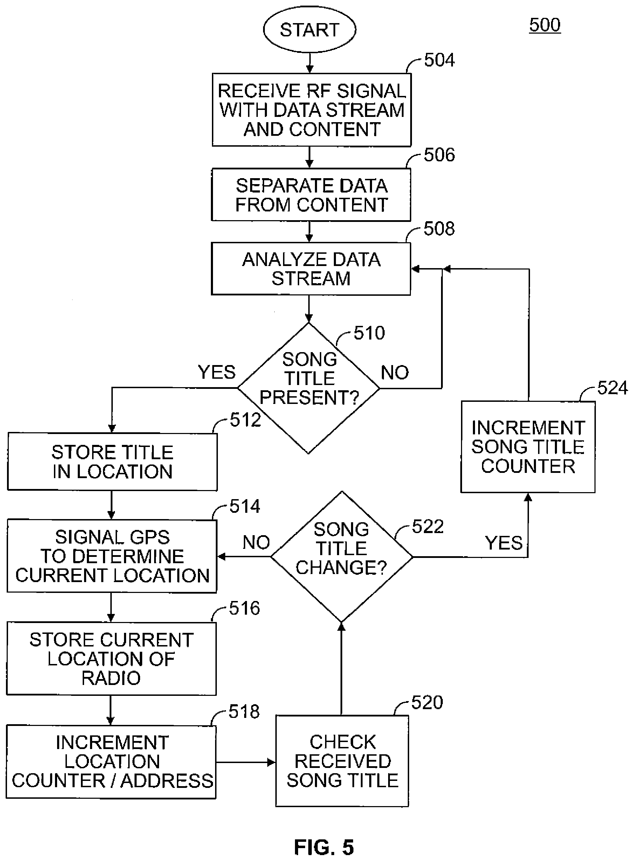

FIG. 5 is a depiction of a method 500 of geo-tagging or, correlating a song received by a moving radio to one or more locations where the song was received. The method 400 starts at step 504 by the reception of RF signal having a data stream that includes at least a song title and/or artist as described above. As also described above, the radio frequency receiver separates the data stream from content, the content being the music itself which is either encoded into a digital format or in an analog format but nevertheless played backed for reproduction from the speaker 112. At step 508, the data stream is analyzed to detect the presence of strings of characters that identify the song title and/or artist.

At step 510, a decision is made whether the data 120 received by the received data stream analyzer 116 includes a song title, or if some commercial or non-program-content message is being received. If no song title is present, or if a commercial or non-program-content message is being received, program flow returns to step 508. Stated another way, the incoming data is continuously analyzed to detect the presence of a song title and/or artist. If at step 510 a song title is determined to be present, the program proceeds to step 512 where the detected song title is stored in a computer-readable storage medium such as a magnetic disc or semiconductor memory device. As stated above, if it is present in the received data, the name of an artist, associated meta-data and radio station data can also be stored. The organization of the computer-readable storage medium vis-à-vis the song titles, and other information, can be arranged substantially as depicted in FIG. 4.

At step 514, the GPS system 130 receives a signal from the received data stream analyzer 116 which causes the GPS system to determine its current location. At step 516 that location is stored in a computer-readable storage medium.

A counter of song title is maintained by the method depicted in FIG. 5. Such a counter is necessary of course to enable the selection of a title in order or by its coordinates. At step 518 a counter or pointer into a computer-readable storage medium where the song titles are kept is incremented. Thereafter at step 520 the data 120 from the receiver is rechecked to determine if the same song title is present or if it has changed.

If the received song title has not changed, the program flow continues or returns to step 514 where the GPS system re-determines its location. Step 514, 516, 520 and 522 thus provide a continuous stream of locations that are determined for as long as the song title does not change.

When the song title changes, the program control proceeds to step 524 where the song title counter is incremented. Thereafter the program flow returns to step 508 where the incoming data stream is analyzed as described above.

Those of ordinary skill in the art will recognize that program content that includes music and movies can be "streamed" over the Internet. Such content can also be transmitted wirelessly to cell phones and their equivalents during a conventional cell phone connection to a content provider.

Wireless communications devices such as the Blackberry® from Research In Motion and equivalents thereof, have the ability to wirelessly receive streaming data from the Internet but to also receive program content via a "conventional" cell phone connection or "call." Such wireless devices include the ability to receive and process data that accompanies a program content Internet "stream" or a program content "broadcast" via a "conventional" cell phone connection.

Any device that is able to wirelessly receive an Internet data stream that carries program content such as music and which data streams include or are accompanied by data related to the content being received, is considered herein as being a "receiver" of such information and functionally equivalent to an HD radio and, for this disclosure, included within the meaning or scope of the term, "HD radio." Any device that is able to wirelessly receive program content such as music, in either an analog or digital format, and which receives an accompanying data stream that provides data related to the content being received, is also considered herein as being a "receiver" and equivalent to an HD radio and, for purposes of this disclosure, included within the meaning or scope of each of the terms: "receiver," "radio frequency receiver" and "HD radio." Stated another way, the terms, "receiver" "radio frequency receiver" and "HD radio" should be construed as including HD-radio receivers and their equivalents, but also including wireless communications devices like the Blackberry® and equivalents thereof.

In view of the foregoing, the term "information" should be broadly construed to include data that identifies a song, such as a song title, the name of an artist or author who performed a song, a radio station and the like, when a song or other content starts and ends, and meta data. And, since such "information" can be conveyed and received via radio frequency signals or the Internet, the terms "signal" and "signals" should be broadly construed to include the delivery or reception of such items by way of either a modulated radio frequency carrier, such as an HD radio signal, a digital data stream carried over a data network such as the Internet, or both.

Those of ordinary skill in the art will recognize that the foregoing description is for purposes of illustration only. The true scope of the invention is set forth in the appurtenant claims.

## Claims

1. A system (100) for geo-tagging streamed music received by a hybrid digital radio frequency receiver (102) configured to recover data (120) from a radio signal and to output recovered data from a data output port (114), the receiver (102) being additionally configured to recover audio signals from the radio signal and to output audio signals to an audio port (106), the system **characterized by**:
a received data stream analyzer (116) coupled to the data output port (114) of the receiver (102) and configured to detect information in a data stream that is representative of a title of a song output from the audio port (106), the received data stream analyzer being additionally configured to generate a trigger signal responsive to detection of a song title in data (120) received by the receiver (102), the trigger signal indicating the detection of a song title in the data (120);
a received song title database (122) coupled to the received data stream analyzer (116) and configured to store a list of titles of songs received by the receiver (102);
a global position system (GPS) (133) coupled to the received data stream analyzer (116), the GPS configured to determine a geographic location of the receiver (102) responsive to receipt by the GPS of the trigger signal from the received data stream analyzer;
a received song location database (134) containing locations where a particular song was received by the receiver and listened to by a user; and
an information correlator (140) coupled to the received song location database (134) and the received song title list database (122) and configured to correlate song title information to a geographic location where the song was received.

2. The system of claim 1, wherein the received song location database (134) further comprises a list of latitude and longitude coordinates, the latitude and longitude coordinates including a first location where the reception of a first received song started and a second location where the reception of the first received song ended.

3. The system of any claim 2, further comprising a display (150) configured to display a graphical representation of a route over which the receiver (102) travelled between when the first received song reception started and when the first received song reception ended.

4. The system of claim 3, wherein the display (150) is configured to display the graphical representation of the route by selectively highlighting at least a portion of an image of a map.

5. The system of any preceding claim, wherein the information correlator (140) is configured correlate a prior geographic location of the receiver (102), to a song title in the received song title database (134).

6. The system of claim 1 wherein the information correlator (140) is configured to display a map (200) on a display device (150) coupled to the received song correlator (140) and to display on the displayed map (200), at least one geographic location along a route (202) where a song, the title of which is in the received song title data base (134) was received by the receiver (102).

7. The system of claim 1, wherein the information correlator (140) is configured to display a map (200) on a display device (150) coupled to the received song correlator (140) and to display on the displayed map (200), a plurality of legs (208, 216) of a multileg route (202), over which the receiver (102) travelled and during which a plurality of songs were received by the receiver (102).

8. The system of claim 1, further comprising a display device (150) having a touch-sensitive screen, the display device (150) being coupled to the information correlator (140), the information correlator being configured to display a map (200) on the display device (150) and to display on the displayed map, a plurality of legs (208, 216) of a route (202), over which the receiver (102) travelled and during which a plurality of songs were received by the receiver (102), the touch-sensitive screen being configured to be responsive to a tactile input above a leg (208, 216) of the route (202) that is displayed on the display device and, output a route leg selection signal to the information correlator (140), the information correlator (140) thereafter effectuating the display of a title of a song received by the receiver (102) while the receiver was located along the leg (208, 216) selected by the tactile input.

9. A method (500) for geo-tagging streamed music received by a hybrid digital radio frequency receiver, the method **characterized by**:
a. receiving (504) a first data signal (120) with song title information;
b. upon receipt of the song title information, generating a trigger signal (514), the trigger signal indicating detection of the song title information in the first data signal;
c. storing the song title information at a received song title database;
d. determining a geographic location of the hybrid digital radio frequency receiver responsive to the trigger signal;
e. storing the geographic location in a received song location database; and
f. correlating the song title information stored at the received song title database with the geographic location stored at the received song location database.

10. The method of claim 9, wherein the step of receiving a first data signal comprises:
receiving a serial data stream (120) carried on a first portion of a radio frequency signal while simultaneously receiving on a second portion of the same radio frequency signal, information from which an audio, baseband representation of the song can be reproduced; and
detecting in the serial data stream (120), at least one of: a song title; an artist; a radio station; and the start and the end of a song, received in the second portion of the radio frequency signal.

11. The method of any of claims 9 to 10, wherein storing the song title information is further comprised of storing a title of the song as an entry to a list of song titles.

12. The method of any of claims 9 to 11, further comprising:
displaying a map (200) on a display device (150), the map (200) displayed on the display device including an identification of
the geographic location.

13. The method any of claims 9 to 12, further comprising displaying a map (200) on a touch-sensitive display device configured to both display images and receive a tactile input and to generate an output signal identifying where the tactile input occurred on the touch-sensitive display screen, the displayed map including indicators of portions (208, 216) of a route (202) over which the radio frequency receiver (102) previously travelled, each indicated portion (208, 216) being a portion of the route (202) during which a particular song was received by the radio frequency receiver (102) and during which the song title information of the received song was recovered from the first data signal.

14. The method of any of claims 9 to 13, further comprising:
displaying a map (200) on a touch-sensitive display device (150) configured to both display images and receive a tactile input and to generate an output signal identifying where the tactile input occurred on the touch-sensitive display screen, the displayed map including indicators of different legs (208, 216) of route (202) over which the receiver travelled;
receiving a tactile input that selects a displayed indicator of a leg of a route;
displaying a list of song title information received by the receiver while the receiver was along the route identified by the displayed indicator.

## Patentansprüche

1. System (100) zum Geotagging von gestreamter Musik, die von einem hybriden digitalen Funkfrequenzempfänger (102) empfangen wird, der konfiguriert ist zum Wiederherstellen von Daten (120) aus einem Funksignal und zum Ausgeben von wiederhergestellten Daten von einem Datenausgangsanschluss (114), wobei der Empfänger (102) zusätzlich konfiguriert ist zum Wiederherstellen von Audiosignalen aus dem Funksignal und Ausgeben von Audiosignalen an einen Audioanschluss (106), wobei das System **gekennzeichnet ist durch**:
einen "empfangener Datenstrom"-Analysator (116), der mit dem Datenausgangsanschluss (114) des Empfängers (102) gekoppelt ist und konfiguriert ist zum Erfassen von Information in einem Datenstrom, die für einen Titel eines von dem Audioanschluss (106) ausgegebenen Lieds repräsentativ ist, wobei der "empfangener Datenstrom"-Analysator zusätzlich konfiguriert ist zum Erzeugen eines Auslösersignals in Reaktion auf eine Erfassung eines Liedtitels in Daten (120), die von dem Empfänger (102) empfangen werden, wobei das Auslösersignal die Erfassung eines Liedtitels in den Daten (120) angibt;
eine "Titel eines empfangenen Lieds"-Datenbank (122), die mit dem "empfangener Datenstrom"-Analysator (116) gekoppelt ist und konfiguriert ist zum Speichern einer Liste von Titeln von Liedern, die von dem Empfänger (102) empfangen werden;
ein globales Positionierungssystem (GPS - global positioning system) (133), das mit dem "empfangener Datenstrom"-Analysator (116) gekoppelt ist, wobei das GPS konfiguriert ist zum Bestimmen einer geographischen Position des Empfängers (102) in Reaktion auf einen Empfang des Auslösersignals von dem "empfangener Datenstrom"-Analysator **durch** das GPS;
eine "Position eines empfangenen Lieds"-Datenbank (134), die Positionen enthält, an denen ein bestimmtes Lied von dem Empfänger empfangen wurde und von einem Benutzer gehört wurde; und
einen Informationskorrelator (140), der mit der "Position eines empfangenen Lieds"-Datenbank (134) und der "Liste der Titel eines empfangenen Lieds"-Datenbank (122) gekoppelt ist und konfiguriert ist zum Korrelieren von Liedtitelinformation mit einer geografischen Position, an der der Lied empfangen wurde.

2. Das System gemäß Anspruch 1, wobei die "Position eines empfangenen Lieds"-Datenbank (134) weiter eine Liste von Breiten- und Längenkoordinaten aufweist, wobei die Breiten- und Längenkoordinaten eine erste Position umfassen, an der der Empfang eines ersten empfangenen Lieds begonnen hat, und eine zweite Position, an der der Empfang des ersten empfangenen Lieds endete.

3. Das System gemäß Anspruch 2, das weiter eine Anzeige (150) aufweist, die konfiguriert ist zum Anzeigen einer grafischen Darstellung einer Route, über die sich der Empfänger (102) zwischen dem Beginn des Empfangs des ersten empfangenen Lieds und dem Ende des Empfangs des ersten empfangenen Lieds bewegt hat.

4. Das System gemäß Anspruch 3, wobei die Anzeige (150) konfiguriert ist zum Anzeigen der grafischen Darstellung der Route durch selektives Hervorheben zumindest eines Teils eines Bildes einer Karte.

5. Das System gemäß einem vorhergehenden Anspruch, wobei der Informationskorrelator (140) konfiguriert ist zum Korrelieren einer früheren geographischen Position des Empfängers (102) mit einem Liedtitel in der "Titel eines empfangenen Lieds"-Datenbank (134).

6. Das System gemäß Anspruch 1, wobei der Informationskorrelator (140) konfiguriert ist zum Anzeigen einer Karte (200) auf einer Anzeigevorrichtung (150), die mit dem "empfangenes Lied"-Korrelator (140) gekoppelt ist, und zum Anzeigen auf der angezeigten Karte (200) zumindest einer geographischen Position entlang einer Route (202), an der ein Lied, dessen Titel in der "Titel eines empfangenen Lieds"-Datenbank (134) ist, von dem Empfänger (102) empfangen wurde.

7. Das System gemäß Anspruch 1, wobei der Informationskorrelator (140) konfiguriert ist zum Anzeigen einer Karte (200) auf einer Anzeigevorrichtung (150), die mit dem "empfangenes Lied"-Korrelator (140) gekoppelt ist, und zum Anzeigen auf der angezeigten Karte (200) einer Vielzahl von Abschnitten (208, 216) einer Route (202) mit mehreren Abschnitten, über die sich der Empfänger (102) bewegt hat und während der eine Vielzahl von Liedern von dem Empfänger (102) empfangen wurde.

8. Das System gemäß Anspruch 1, das weiter eine Anzeigevorrichtung (150) mit einem berührungsempfindlichen Bildschirm aufweist, wobei die Anzeigevorrichtung (150) mit dem Informationskorrelator (140) gekoppelt ist, wobei der Informationskorrelator konfiguriert ist zum Anzeigen einer Karte (200) auf der Anzeigevorrichtung (150) und zum Anzeigen auf der angezeigten Karte einer Vielzahl von Abschnitten (208, 216) einer Route (202), über die sich der Empfänger (102) bewegt hat und während der eine Vielzahl von Liedern von dem Empfänger (102) empfangen wurde, wobei der berührungsempfindliche Bildschirm konfiguriert ist, auf eine taktile Eingabe über einem Abschnitt (208, 216) der Route (202) zu reagieren, die auf der Anzeigevorrichtung angezeigt wird, und ein Routenabschnittauswahlsignal an den Informationskorrelator (140) auszugeben, wobei der Informationskorrelator (140) danach die Anzeige eines Titels eines Lieds bewirkt, das von dem Empfänger (102) empfangen wurde, während sich der Empfänger entlang des Abschnitts (208, 216) befand, der durch die taktile Eingabe ausgewählt wird.

9. Ein Verfahren (500) zum Geotagging von gestreamter Musik, die von einem hybriden digitalen Funkfrequenzempfänger empfangen wird, wobei das Verfahren **gekennzeichnet ist durch**:
a. Empfangen (504) eines ersten Datensignals (120) mit Liedtitelinformation;
b. bei Empfang der Liedtitelinformation, Erzeugen eines Auslösersignals (514), wobei das Auslösersignal eine Erfassung der Liedtitelinformation in dem ersten Datensignal angibt;
c. Speichern der Liedtitelinformation in einer "Titel eines empfangenen Lieds"-Datenbank;
d. Bestimmen einer geographischen Position des hybriden digitalen Funkfrequenzempfängers in Reaktion auf das Auslösersignal;
e. Speichern der geografischen Position in einer "Position eines empfangenen Lieds"-Datenbank; und
f. Korrelieren der Liedtitelinformation, die in der "Titel eines empfangenen Lieds"-Datenbank gespeichert ist, mit der geografischen Position, die in der "Position eines empfangenen Lieds"-Datenbank gespeichert ist.

10. Das Verfahren gemäß Anspruch 9, wobei der Schritt des Empfangens eines ersten Datensignals aufweist:
Empfangen eines seriellen Datenstroms (120), der auf einem ersten Teil eines Funkfrequenzsignals getragen wird, während eines gleichzeitigen Empfangens auf einem zweiten Teil desselben Funkfrequenzsignals von Information, aus der eine Audiobasisbandrepräsentation des Lieds reproduziert werden kann; und
Erfassen in dem seriellen Datenstrom (120) zumindest eines aus: einem Liedtitel; einem Künstler; einer Radiostation; und dem Anfang und dem Ende eines Lieds, empfangen in dem zweiten Teil des Funkfrequenzsignals.

11. Das Verfahren gemäß einem der Ansprüche 9 bis 10, wobei das Speichern der Liedtitelinformation weiter ein Speichern eines Titels des Lieds als einen Eintrag in eine Liste von Liedtiteln aufweist.

12. Das Verfahren gemäß einem der Ansprüche 9 bis 11, das weiter aufweist: Anzeigen einer Karte (200) auf einer Anzeigevorrichtung (150), wobei die Karte (200), die auf der Anzeigevorrichtung angezeigt wird, eine Identifikation der geographischen Position umfasst.

13. Das Verfahren gemäß einem der Ansprüche 9 bis 12, das weiter ein Anzeigen einer Karte (200) auf einer berührungsempfindlichen Anzeigevorrichtung aufweist, die konfiguriert ist, um sowohl Bilder anzuzeigen als auch eine taktile Eingabe zu empfangen und ein Ausgangssignal zu erzeugen, das identifiziert, wo die taktile Eingabe auf dem berührungsempfindlichen Anzeigebildschirm erfolgte, wobei die angezeigte Karte Indikatoren von Abschnitten (208, 216) einer Route (202) umfasst, über die sich der Funkfrequenzempfänger (102) zuvor bewegt hat, wobei jeder angezeigte Abschnitt (208, 216) ein Abschnitt der Route (202) ist, während dem ein bestimmtes Lied von dem Funkfrequenzempfänger (102) empfangen wurde und während dem die Liedtitelinformation des empfangenen Lieds aus dem ersten Datensignal wiederhergestellt wurde.

14. Das Verfahren gemäß einem der Ansprüche 9 bis 13, das weiter aufweist:
Anzeigen einer Karte (200) auf einer berührungsempfindlichen Anzeigevorrichtung (150), die konfiguriert ist, um sowohl Bilder anzuzeigen als auch eine taktile Eingabe zu empfangen und ein Ausgangssignal zu erzeugen, das identifiziert, wo die taktile Eingabe auf dem berührungsempfindlichen Anzeigebildschirm erfolgte, wobei die angezeigte Karte Indikatoren von verschiedenen Abschnitten (208, 216) einer Route (202) umfasst, über die sich der Empfänger bewegt hat;
Empfangen einer taktilen Eingabe, die einen angezeigten Indikator eines Abschnitts einer Route auswählt;
Anzeigen einer Liste von Liedtitelinformation, die von dem Empfänger empfangen wurde, während sich der Empfänger entlang der Route befand, die durch den angezeigten Indikator identifiziert wird.

## Revendications

1. Système (100) pour marquer géographiquement une musique diffusée en mode continu reçue par un récepteur radiofréquence numérique hybride (102) configuré pour récupérer des données (120) à partir d'un signal radio et pour sortir les données récupérées à partir d'un port de sortie de données (114), le récepteur (102) étant en plus configuré pour récupérer des signaux audio à partir du signal radio et pour sortir des signaux audio vers un port audio (106), le système étant **caractérisé par** :
un analyseur de flot de données reçu (116) couplé au port de sortie de données (114) du récepteur (102) et configuré pour détecter des informations dans un flot de données qui sont représentatives d'un titre d'une chanson sortie à partir du port audio (106), l'analyseur de flot de données reçu étant en plus configuré pour générer un signal de déclenchement en réponse à la détection d'un titre de chanson dans les données (120) reçues par le récepteur (102), le signal de déclenchement indiquant la détection d'un titre de chanson dans les données (120) ;
une base de données de titres de chansons reçues (122) couplée à l'analyseur de flot de données reçu (116) et configurée pour mémoriser une liste de titres de chansons reçues par le récepteur (102) ;
un système de positionnement mondial (GPS) (133) couplé à l'analyseur de flot de données reçu (116), le système GPS étant configuré pour déterminer un emplacement géographique du récepteur (102) en réponse à la réception par le système GPS du signal de déclenchement provenant de l'analyseur de flot de données reçu ;
une base de données d'emplacements de chansons reçues (134) contenant les emplacements où une chanson particulière a été reçue par le récepteur et écoutée par un utilisateur ; et
un corrélateur d'informations (140) couplé à la base de données d'emplacements de chansons reçues (134) et à la base de données de listes de titres de chansons reçues (122) et configuré pour corréler les informations de titres de chansons avec un emplacement géographique où la chanson a été reçue.

2. Système selon la revendication 1, dans lequel la base de données d'emplacements de chansons reçues (134) comprend en outre une liste de coordonnées de latitude et de longitude, les coordonnées de latitude et de longitude comprenant un premier emplacement où la réception d'une première chanson reçue a débuté et un deuxième emplacement où la réception de la première chanson reçue s'est terminée.

3. Système selon l'une quelconque des revendications 2, comprenant en outre un afficheur (150) configuré pour afficher une représentation graphique d'un trajet sur lequel le récepteur (102) s'est déplacé entre l'instant auquel la réception de la première chanson reçue a débuté et l'instant auquel la réception de la première chanson reçue s'est terminée.

4. Système selon la revendication 3, dans lequel l'afficheur (150) est configuré pour afficher la représentation graphique du trajet en mettant en évidence de manière sélective au moins une partie d'une image d'une carte.

5. Système selon l'une quelconque des revendications précédentes, dans lequel le corrélateur d'informations (140) est configuré pour corréler un emplacement géographique antérieur du récepteur (102) avec un titre de chanson dans la base de données de titres de chansons reçues (134).

6. Système selon la revendication 1, dans lequel le corrélateur d'informations (140) est configuré pour afficher une carte (200) sur un dispositif d'affichage (150) couplé au corrélateur de chansons reçues (140) et pour afficher, sur la carte affichée (200), au moins un emplacement géographique le long d'un trajet (202) où une chanson, dont le titre est dans la base de données de titres de chansons reçues (134), a été reçue par le récepteur (102).

7. Système selon la revendication 1, dans lequel le corrélateur d'informations (140) est configuré pour afficher une carte (200) sur un dispositif d'affichage (150) couplé au corrélateur de chansons reçues (140) et pour afficher, sur la carte affichée (200), une pluralité de branches (208, 216) d'un trajet multi-branche (202), sur lesquelles le récepteur (102) s'est déplacé et pendant lesquelles une pluralité de chansons ont été reçues par le récepteur (102).

8. Système selon la revendication 1, comprenant en outre un dispositif d'affichage (150) comportant un écran tactile, le dispositif d'affichage (150) étant couplé au corrélateur d'informations (140), le corrélateur d'informations étant configuré pour afficher une carte (200) sur le dispositif d'affichage (150) et pour afficher, sur la carte affichée, une pluralité de branches (208, 216) d'un trajet (202), sur lesquelles le récepteur (102) s'est déplacé et pendant lesquelles une pluralité de chansons ont été reçues par le récepteur (102), l'écran tactile étant configuré pour réagir à une entrée tactile au-dessus d'une branche (208, 216) du trajet (202) qui est affiché sur le dispositif d'affichage et, pour sortir un signal de sélection de branche de trajet vers le corrélateur d'informations (140), le corrélateur d'informations (140) effectuant ensuite l'affichage d'un titre d'une chanson reçue par le récepteur (102) alors que le récepteur était situé le long de la branche (208, 216) sélectionnée par l'entrée tactile.

9. Procédé (500) pour marquer géographiquement une musique diffusée en mode continu reçue par un récepteur radiofréquence numérique hybride, le procédé étant **caractérisé par** :
(a) la réception (504) d'un premier signal de données (120) avec des informations de titre de chanson ;
(b) lors de la réception des informations de titre de chanson, la génération d'un signal de déclenchement (514), le signal de déclenchement indiquant la détection des informations de titre de chanson dans le premier signal de données ;
(c) la mémorisation des informations de titre de chanson dans une base de données de titres de chansons reçues ;
(d) la détermination d'un emplacement géographique du récepteur radiofréquence numérique hybride en réponse au signal de déclenchement ;
(e) la mémorisation de l'emplacement géographique dans une base de données d'emplacements de chansons reçues ; et
(f) la mise en corrélation des informations de titre de chanson mémorisées dans la base de données de titres de chansons reçues avec l'emplacement géographique mémorisé dans la base de données d'emplacements de chansons reçues.

10. Procédé selon la revendication 9, dans lequel l'étape de réception d'un premier signal de données comprend :
la réception d'un flot de données série (120) transporté sur une première partie d'un signal radiofréquence tout en recevant simultanément, sur une deuxième partie du même signal radiofréquence, des informations à partir desquelles une représentation de bande de base audio de la chanson peut être reproduite ; et
la détection, dans le flot de données série (120), d'au moins l'un : d'un titre de chanson ; d'un artiste ; d'une station radio ; et du début et de la fin d'une chanson, reçus dans la deuxième partie du signal radiofréquence.

11. Procédé selon l'une quelconque des revendications 9 et 10, dans lequel la mémorisation des informations de titre de chanson comprend en outre la mémorisation d'un titre de la chanson en tant qu'entrée dans une liste de titres de chansons.

12. Procédé selon l'une quelconque des revendications 9 à 11, comprenant en outre :
l'affichage d'une carte (200) sur un dispositif d'affichage (150), la carte (200) affichée sur le dispositif d'affichage comprenant une identification de l'emplacement géographique.

13. Procédé selon l'une quelconque des revendications 9 à 12, comprenant en outre l'affichage d'une carte (200) sur un dispositif d'affichage tactile configuré à la fois pour afficher des images et recevoir une entrée tactile et pour générer un signal de sortie identifiant l'emplacement auquel l'entrée tactile a eu lieu sur l'écran d'affichage tactile, la carte affichée comprenant des indicateurs des parties (208, 216) d'un trajet (202) sur lequel le récepteur radiofréquence (102) s'est déplacé précédemment, chaque partie indiquée (208, 216) étant une partie du trajet (202) pendant laquelle une chanson particulière a été reçue par le récepteur radiofréquence (102) et pendant laquelle les informations de titre de chanson de la chanson reçue ont été récupérées à partir du premier signal de données.

14. Procédé selon l'une quelconque des revendications 9 à 13, comprenant en outre :
l'affichage d'une carte (200) sur un dispositif d'affichage tactile (150) configuré à la fois pour afficher des images et recevoir une entrée tactile et pour générer un signal de sortie identifiant l'emplacement auquel l'entrée tactile a eu lieu sur l'écran d'affichage tactile, la carte affichée comprenant des indicateurs des différentes branches (208, 216) d'un trajet (202) sur lesquelles le récepteur s'est déplacé ;
la réception d'une entrée tactile qui sélectionne un indicateur affiché d'une branche d'un trajet ;
l'affichage d'une liste d'informations de titre de chanson reçue par le récepteur alors que le récepteur était le long du trajet identifié par l'indicateur affiché.
